# EUROPÄISCHE PATENTANMELDUNG

(11) **EP 3 825 115 A1**
(43) Veröffentlichungstag der Anmeldung: **26.05.2021**
(21) Anmeldenummer: 19211026.0
(22) Anmeldetag: 22.11.2019
(51) Int. Cl.: B32B 5/00, C08G 59/24, C08G 59/42, C08L 63/00

(54) **PEO-PPO-PEO TRIBLOCKCOPOLYMERE ALS ADDITIVE FÜR EPOXID-ANHYDRID-SYSTEME**

(71) Anmelder: Henkel AG & Co. KGaA, 40589 Düsseldorf (DE)
(72) Erfinder: Niegemeier, Andreas, 40235 Düsseldorf (DE); Ferencz, Andreas, 40223 Düsseldorf (DE); Schmidt, Tamara, 46049 Oberhausen (DE); Benomar, Mustapha, 47137 Duisburg (DE); Lupp, Wolfgang, 47058 Duisburg (DE)

(57) **Zusammenfassung**

Die vorliegende Erfindung betrifft härtbare Harzzusammensetzungen, Verfahren zur Herstellung gehärteter Zusammensetzung unter Verwendung jener härtbaren Harzzusammensetzungen, sowie mittels solcher Verfahren hergestellte Artikel, insbesondere Formteile.

## Beschreibung

Die vorliegende Erfindung betrifft härtbare Harzzusammensetzungen, Verfahren zur Herstellung gehärteter Zusammensetzung unter Verwendung solcher härtbaren Harzzusammensetzungen, sowie mittels solcher Verfahren hergestellte Artikel, insbesondere Formteile.

Die Leichtbauweise von Automobilen nimmt einen immer größer werdenden Stellenwert in der Automobilindustrie ein, wobei insbesondere Formteile aus karbonfaserverstärktem Kunststoff (CFRP) von der Automobilindustrie verstärkt nachgefragt werden. Derartige Formteile werden beispielsweise in Form von Felgen verbaut, welche bei Bremsvorgängen hohen Temperaturen ausgesetzt sind. Folglich ist es unabdingbar, bei der Herstellung entsprechender Formteile Matrixharze zu verwenden, welche im gehärteten Zustand sehr hohe Glasübergangstemperaturen T_{g} aufweisen, da andernfalls ein hitzeabweisender Schutzlack aufgetragen werden müsste, wodurch sich der Herstellungsprozess noch aufwendiger gestalten würde. Aus diesem Grunde werden bevorzugt Matrixharze basierend auf Epoxid-Anhydrid-Systemen verwendet, da diese bei entsprechender Vernetzung hohe Glasübergangstemperaturen aufweisen.

Um die Schlagzähigkeit der vorgenannten Systeme zu erhöhen, werden den reaktiven Harzmischungen üblicherweise Flexibilisierer oder Toughener zugesetzt. Konventionelle Flexibilisierer oder Toughener in Form von CTNB (carboxyl terminated butadiene nitrile) oder CSR (core-shell rubber) -Partikeln führen allerdings zu erniedrigten Glasübergangstemperaturen T_{g} der ausgehärteten Produkte und lassen diese darüber hinaus trüb und verfärbt erscheinen.

Aus der US 8,927,677 B2 ist die Verwendung von Polyolen mit hohen Molekulargewichten (>7000) als Toughener für härtbare Epoxidharzzusammensetzungen bekannt, welche sowohl die Glasübergangstemperatur als auch die Zähigkeit eines entsprechend gehärteten Artikels zu erhöhen vermögen. Weiterhin ist auch die Verwendung verschiedener gemischter Polyether in Form von Multiblockcopolymeren, beispielweise in Form von Di-, Tri-, oder Tetrablockcopolymeren, als Toughener für härtbare polymere Matrixsysteme bekannt. So offenbart beispielsweise die WO 2016/179063 A1 auf Polyestern basierende thermoplastische Polymermischungen, welchen amphiphile Polyalkylenetherbasierte Blockcopolymere zur Erhöhung der Zähigkeit zugesetzt werden. Auch die Möglichkeit transparenter Produkte wird erwähnt. Die EP 2 110 397 A1 offenbart die Verwendung von Schlagzähigkeitsmodifikatoren, welche durch Umsetzung amphiphiler Blockcopolymere mit Isocyanaten erhalten werden und welche die Schlagzähigkeit gehärteter Epoxidharzzusammensetzungen erhöhen und gleichzeitig die Glasübergangstemperatur zumindest nicht negativ beeinflussen. Unter kommerzielle PPO-PBO Diblockcopolymere führen zwar sowohl zu transparenten als auch farblosen gehärteten Produkten, beeinflussen jedoch weder die Glasübergangstemperatur noch die Zähigkeit der gehärteten Produkte in positiver Weise.

Es besteht folglich weiterhin Bedarf an Epoxid-basierten Harzzusammensetzungen, welche gehärtete Artikel mit sowohl hoher Glasübergangstemperatur (DSC (Differential Scanning Calorimetry) Midpoint ≥200 °C), als auch Zähigkeit (K1c-Wert ≥0,8) ergeben, die darüber hinaus möglichst transparent und farblos sind.

Die vorliegende Erfindung basiert auf der Erkenntnis der Erfinder, dass durch die Verwendung von amphiphilen PEO (Polyethylen) - PPO (Polypropylen) - PEO (Polyethylen) Triblockcopolymeren mit bestimmten Mindestgesamtmolmassen sowie bestimmten Massenanteilen von EO-Gruppen im Gesamtpolymer anstelle konventioneller Toughener in Epoxidharz-Anhydrid-Systemen härtbare Formulierungen erhalten werden können, welche im gehärteten Zustand hohe Glasübergangstemperaturen und Zähigkeit bei gleichzeitig hervorragenden optischen Eigenschaften, d.h. Transparenz und annähernde Farblosigkeit, aufweisen.

Die vorliegende Erfindung betrifft daher in einem ersten Aspekt eine Harzzusammensetzung umfassend mindestens eine Epoxidharz-Komponente und mindestens eine Härter-Komponente, dadurch gekennzeichnet, dass die Harzzusammensetzung des Weiteren mindestens ein PEO-PPO-PEO Triblockcopolymer umfasst.

Einen weiteren Aspekt der vorliegenden Erfindung stellt ein Verfahren zur Herstellung einer gehärteten Zusammensetzung, umfassend die Schritte des
(1) Bereitstellens einer Harzzusammensetzung, wie hierin beschrieben; und
(2) Härtens der Harzzusammensetzung, um eine gehärtete Zusammensetzung zu erhalten.

Die vorliegende Erfindung betrifft in einem weiteren Aspekt eine gehärtete Zusammensetzung erhältlich nach einem wie hierin beschriebenen Verfahren.

"Mindestens ein", wie hierin verwendet, bezieht sich auf 1 oder mehr, beispielsweise 1, 2, 3, 4, 5, 6, 7, 8, 9 oder mehr. Im Zusammenhang mit Bestandteilen der hierin beschriebenen KatalysatorZusammensetzungen bezieht sich diese Angabe nicht auf die absolute Menge an Molekülen, sondern auf die Art des Bestandteils. "Mindestens ein Epoxid" bedeutet daher beispielsweise ein oder mehrere verschiedene Epoxide, d.h. eine oder mehrere verschiedene Arten von Epoxiden. Zusammen mit Mengenangaben beziehen sich die Mengenangaben auf die Gesamtmenge der entsprechend bezeichneten Art von Bestandteil, wie bereits oben definiert.

"Ungefähr" oder "ca.", wie hierin im Zusammenhang mit Zahlenwerten verwendet, bezieht sich auf den referenzierten Zahlenwert ±10%, vorzugsweise ±5%.

Die im vorliegenden Text angegebenen Molekulargewichte beziehen sich, soweit nicht anders angegeben, auf das Zahlenmittel des Molekulargewichts (Mn). Das zahlenmittlere Molekulargewicht kann mittels Gelpermeationschromatographie gemäß DIN 55672-1:2007-08 mit THF als Eluent und Styrolstandards bestimmt werden. Wenn nicht anders angegeben, sind alle angegebenen Molekulargewichte solche, die mittels GPC bestimmt wurden.

Die Viskosität der hierin beschriebenen flüssigen Zusammensetzung ist insbesondere niedrig genug, damit die Zusammensetzung pumpbar ist und beispielsweise Fasermaterialien, wie sie für faserverstärkte Kunststoffteile verwendet werden, benetzen und imprägnieren zu können. In verschiedenen Ausführungsformen hat das Reaktionsgemisch bei einer Temperatur von 100 °C eine Viskosität von <100 mPas. Zur Bestimmung der Viskosität wird die Harzmischung bei Raumtemperatur mit einem geeigneten Mischer hergestellt und auf einem Platte/Platte Rheometer mit 25 mm Durchmesser, einem Spalt von 0,05 mm und einer Scherrate von 100s in Rotation die Viskosität bei steigender Temperatur mit einer Heizrate von 6 K/min bestimmt.

Die vorliegende Erfindung betrifft Harzzusammensetzungen, welche mindestens eine Epoxidharz-Komponente und mindestens eine Härter-Komponente umfassen und des Weiteren dadurch gekennzeichnet sind, dass sie ferner mindestens ein PEO-PPO-PEO Triblockcopolymer umfassen.

In einigen Ausführungsformen der vorliegenden Erfindung weist das mindestens eine PEO-PPO-PEO Triblockcopolymer daher ein Molekulargewicht von >6000 und bevorzugt von >12.000 auf. So weisen erfindungsgemäß eingesetzte PEO-PPO-PEO Triblockcopolymere beispielsweise und ohne einschränkend verstanden werden zu wollen, ein Gesamtmolekulargewicht von 6025, 6050, 6100, 6125, 6150, 6175, 6200, 6250, 6300, 6400, 6500, 7000, 7500, 8000, 9000, 10.000, 11.000, 12.000, 13.000, 14.000, 15.000, 16.000, 17.000, 18.000, 19.000 oder 20.000 auf.

In weiteren Ausführungsformen zeichnet sich das wie hierin beschrieben verwendete PEO-PPO-PEO Triblockcopolymer durch einen bestimmten Molmassenanteil der Ethylenoxid-Monomere an der Gesamtmolmasse des Triblockpolymers aus. In einigen Ausführungsformen beträgt der Molmassenanteil der PEO-Blockpolymere daher mindestens 50 %. Entsprechend kann der Molmassenanteil der PEO-Blockpolymere in den PEO-PPO-PEO Triblockcopolymeren 50 %, 51 %, 52 %, 53 %, 54 %, 55 %, 60 %, 65 %, 70 %, 75 %, 80 %, 85 %, 90 % oder 95 % betragen. In weiteren Ausführungsformen beträgt der Molmassenanteil der PEO-Blockpolymere 50 % - 90 %, vorzugsweise 50 % - 85 % und bevorzugt 50 % -80 %.

Beispiele kommerziell erhältlicher, geeigneter PEO-PPO-PEO Triblockcopolymere sind u.A. Pluronic F68, Pluronic PE 6800, Synperonic PE/F68, Pluronic F77, Pluronic F87, Synperonic PE/F87, Pluronic F88, Pluronic F98, Pluronic P105, Pluronic PE 10500, Pluronic F108, Synperonic PE/F108, Pluronic F127 und Synperonic PE/F127.

Die erfindungsgemäßen Harzzusammensetzungen enthalten das wie hierin beschriebene PEO-PPO-PEO Triblockcopolymer typischerweise, bezogen auf das Gesamtgewicht der Harzzusammensetzung, in Mengen im Bereich von 5-20 Gew.-%, vorzugsweise im Bereich von 7 - 18 Gew.-% und bevorzugt im Bereich von 10 - 15 Gew.-%. Dabei können wie hierin beschriebene PEO-PPO-PEO Triblockcopolymere als Einzelkomponente oder in Form ihrer Mischungen verwendet werden.

Prinzipiell können die wie hierin beschriebenen PEO-PPO-PEO Triblockcopolymere entweder als Bestandteil der Epoxidharz-Komponente, wie nachfolgend definiert, oder als Bestandteil der Härter-Komponente, wie nachfolgend definiert, eingesetzt werden. Alternativ besteht weiterhin die Möglichkeit, die wie hierin beschriebenen PEO-PPO-PEO Triblockcopolymere als Bestandteil beider vorgenannter Komponenten zu verwenden. Vorzugsweise wird ein wie hierin beschriebenes PEO-PPO-PEO Triblockcopolymer jedoch in die Härter-Komponente eingearbeitet, da sich, im Vergleich zu Epoxidharzkomponenten enthaltend ein wie hierin beschriebenes PEO-PPO-PEO Triblockcopolymer, verbesserte Lagerstabilitäten ergeben, wobei sich eine erhöhte Lagerstabilität in diesem Falle in einer deutlich verringerten Kristallisationsgeschwindigkeit und darüber hinaus in einer verminderten Vergilbung äußert.

Entsprechend ist, gemäß einigen bevorzugten Ausführungsformen, das mindestens eine PEO-PPO-PEO Triblockcopolymer in der erfindungsgemäßen Harzzusammensetzung als Bestandteil der Härter-Komponente enthalten.

Harzzusammensetzungen, welche ein wie hierin definiertes PEO-PPO-PEO Triblockcopolymer umfassen, können zu Artikeln ausgehärtet werden, welche eine besonders vorteilhafte Kombination von optischen und mechanischen Eigenschaften aufweisen. So zeichnen sich entsprechend gehärtete Produkte durch eine hohe Zähigkeit (K1c-Wert ≥0,8) und hohe Glasübergangstemperaturen (DSC Midpoint ≥200 °C) aus und sind gleichzeitig sowohl transparent als auch farblos.

Erfindungsgemäß umfassen die Harzzusammensetzungen des Weiteren mindestens eine Epoxidharz-Komponente. Eine geeignete Epoxidharz-Komponente umfasst dabei eine oder mehrere EpoxidVerbindungen, wie nachfolgend beschrieben.

Im Kontext der vorliegenden Erfindung kann ein Epoxidharz Epoxidgruppen-haltige Monomere, Präpolymere und Polymere sowie Gemische der vorgenannten umfassen und wird im Folgenden auch als Epoxid bzw. Epoxidgruppen-haltiges Harz bezeichnet. Geeignete Epoxidgruppen-haltige Harze sind insbesondere Harze mit 1 bis 10, bevorzugt 2 bis 10 Epoxidgruppen pro Molekül. "Epoxidgruppen", wie hierin verwendet, bezieht sich auf 1,2-Epoxidgruppen (Oxirane).

Die hierin verwendbaren Epoxidharze können variieren und schließen konventionelle und kommerziell erhältlich Epoxidharze, die jeweils individuell oder in Kombination von zwei oder mehr verschiedenen Epoxidharzen eingesetzt werden können, ein. Bei der Auswahl der Epoxidharze spielen nicht nur die Eigenschaften des Endprodukts, sondern auch die Eigenschaften des Epoxidharzes, wie zum Beispiel die Viskosität und andere Eigenschaften, die die Verarbeitbarkeit beeinflussen, eine Rolle.

Das Epoxid-Äquivalent der Polyepoxide kann zwischen 75 und 50000, vorzugsweise zwischen 170 und 5000, variieren. Die Polyepoxide können grundsätzlich gesättigte, ungesättigte, cyclische oder acyclische, aliphatische, cycloaliphatische, aromatische oder heterocyclische Polyepoxidverbindungen sein.

Gemäß einigen Ausführungsformen umfasst die mindestens eine Epoxidharz-Komponente ein cycloaliphatisches Epoxidharz.

Beispiele für geeignete cycloaliphatische Epoxide sind Verbindungen, die einen gesättigten Kohlenwasserstoffring mit einem an zwei benachbarte Kohlenstoffatome des Kohlenstoffrings gebundenen Epoxid-Sauerstoffatom aufweisen, wie in nachfolgender Formel dargestellt: 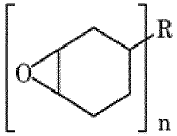 wobei R eine Verknüpfungsgruppe und n eine ganze Zahl von 2 bis 10, vorzugsweise von 2 bis 4 und noch bevorzugter von 2 bis 3 ist. Dabei handelt es sich um Di- oder Polyepoxide, wenn n 2 oder mehr ist. Derartige cycloaliphatische Epoxidharze können ein Epoxid-Äquivalentgewicht von ungefähr 95 bis 250, insbesondere von 100 bis 150 haben. Mischungen von mono-, di- und/oder Polyepoxiden können verwendet werden.

Weitere Beispiele für geeignete cycloaliphatische Epoxide sind insbesondere die Epoxide von cycloaliphatischen Estern von Dicarbonsäuren wie bis-(3,4-Epoxycyclohexylmethyl)oxalat, bis-(3,4-Epoxy-cyclohexylmethyl)adipat, bis-(3,4-Epoxy-6-Methylcyclohexylmethyl)adipat, bis-(3,4-Epoxycyclohexylmethyl)pimelat. Weitere geeignete Diepoxide von cycloaliphatischen Estern sind z.B. in der US-A-2750395 beschrieben.

Weitere geeignete cycloaliphatische Epoxide sind beispielsweise 3,4-Epoxycyclohexylmethyl-3,4-Epoxycyclohexancarboxylat, bis-(3,4-Epoxycyclohexyl)adipat, und 3,4-Epoxy-1-Methylcyclohexylmethyl-3,4-epoxy-1-methylcyclohexancarboxylat. Weitere geeignete cycloaliphatische Epoxide sind beispielsweise in der US-A-2890194 beschrieben.

Gemäß einigen Ausführungsformen umfasst die mindestens eine Epoxidharz-Komponente eine Epoxidverbindung ausgewählt aus der Gruppe bestehend aus bis-(3,4-Epoxycyclohexylmethyl)oxalat, bis-(3,4-Epoxy-cyclohexylmethyl)adipat, bis-(3,4-Epoxy-6-Methylcyclohexylmethyl)adipat, bis-(3,4-Epoxycyclohexylmethyl)pimelat, 3,4-Epoxycyclohexylmethyl-3,4-Epoxycyclohexancarboxylat, bis-(3,4-Epoxycyclohexyl)adipat, 3,4-Epoxy-1-Methylcyclohexylmethyl-3,4-epoxy-1-methylcyclohexancarboxylat, und Mischungen davon.

Weitere, zur Verwendung in den erfindungsgemäßen Harzzusammensetzungen geeignete Polyepoxide schließen beispielsweise die Polyglycidylether ein, die durch Reaktion von Epichlorhydrin oder Epibromhydrin mit einem Polyphenol in Gegenwart von Alkali hergestellt werden. Hierfür geeignete Polyphenole sind beispielsweise Resorcin, Brenzkatechin, Hydrochinon, Bisphenol A (Bis-(4-Hydroxyphenyl)-2,2-propan)), Bisphenol F (Bis(4-hydroxyphenyl)methan), Bis(4-hydroxyphenyl)-1,1-isobutan, 4,4'-Dihydroxybenzophenon, Bis(4-hydroxyphenyl)-1,1-ethan, 1,5-Hydroxynaphthalin. Weitere geeignete Polyphenole als Basis für die Polyglycidylether sind die bekannten Kondensationsprodukte aus Phenol und Formaldehyd oder Acetaldehyd vom Typ der Novolakharze.

Weitere prinzipiell geeignete Polyepoxide sind die Polyglycidylether von Polyalkoholen oder Diaminen. Diese Polyglycidylether leiten sich von Polyalkoholen wie Ethylenglykol, Diethylenglykol, Triethylenglykol, 1,2-Propylenglykol, 1,4-Butylenglykol, Triethylenglykol, 1,5-Pentandiol, 1,6-Hexandiol oder Trimethylolpropan ab.

Weitere Polyepoxide sind Polyglycidylester von Polycarbonsäuren, beispielsweise Umsetzungen von Glycidol oder Epichlorhydrin mit aliphatischen oder aromatischen Polycarbonsäuren wie Oxalsäure, Bernsteinsäure, Glutarsäure, Terephthalsäure oder Dimerfettsäure.

Weitere geeignete Epoxidharze sind im Stand der Technik bekannt und können beispielsweise Lee H. & Neville, K., Handbook of Epoxy Resins, McGraw-Hill Book Company, Neuauflage von 1982 entnommen werden.

Weitere Epoxide leiten sich von den Epoxidierungsprodukten olefinisch ungesättigter cycloaliphatischer Verbindungen oder von nativen Ölen und Fetten ab.

Je nach Anwendungszweck kann es bevorzugt sein, dass die Zusammensetzung zusätzlich ein flexibilisierend wirkendes Harz enthält. Hierbei kann es sich ebenfalls um ein Epoxidharz handeln. Als flexibilisierend wirkende Epoxyharze können die an sich bekannten Addukte aus Carboxyl-terminierten Butadienacrylnitrilcopolymeren (CTBN) und flüssigen Epoxidharzen auf der Basis des Diglycidylethers vom Bisphenol A eingesetzt werden. Konkrete Beispiele sind die Umsetzungsprodukte der Hycar CTBN 1300 X8, 1300 X13 oder 1300 X15 der Firma B. F. Goodrich mit flüssigen Epoxidharzen. Weiterhin lassen sich auch die Umsetzungsprodukte von aminoterminierten Polyalkylenglykolen (Jeffamine) mit einem Überschuss an flüssigen Polyepoxiden einsetzen. Grundsätzlich können auch Umsetzungsprodukte von Mercapto-funktionellen Prepolymeren oder flüssige Thiokol-Polymere mit einem Überschuss an Polyepoxiden als flexibilisierende Epoxidharze erfindungsgemäß eingesetzt werden. Ganz besonders bevorzugt sind jedoch die Umsetzungsprodukte von polymeren Fettsäuren, insbesondere der Dimerfettsäure mit Epichlorhydrin, Glycidol oder insbesondere Diglycidylether des Bisphenols A (DGBA).

Die erfindungsgemäßen Harzzusammensetzungen umfassen des Weiteren mindestens eine Härter-Komponente.

Gemäß einigen Ausführungsformen umfasst die mindestens eine Härter-Komponente mindestens einen Anhydrid-Härter.

Beispiele für geeignete Anhydrid-basierte Härter sind Norbornen-basierte Dicarbonsäureanhydride. Geeignete Norbornen-basierte Dicarbonsäureanhydride werden durch die nachfolgende Formel dargestellt: 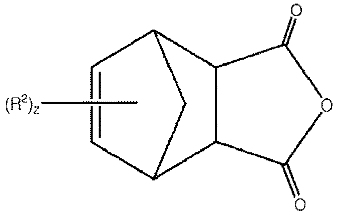 wobei jedes R unabhängig Hydrocarbyl, Halogen oder inert substituiertes Hydrocarbyl repräsentiert; z eine ganze Zahl von 0 bis 8, vorzugsweise eine ganze Zahl von 0 bis 2, insbesondere von 0 bis 1; und R², wenn vorhanden, eine Alkylgruppe, vorzugsweise eine Methylgruppe darstellt. Wie hierin verwendet bedeutet die Bezeichnung "inert substituiert", dass der Substituent die Fähigkeit der Anhydrid-Gruppe, mit dem Epoxidharz zu reagieren und dieses zu härten, nicht nachteilig beeinflusst. In Fällen, in denen z 1 oder mehr ist, ist vorzugsweise mindestens eine R²-Gruppe an das Kohlenstoffatom in Position 5 gebunden. In Norbornen-basierten Dicarbonsäureanhydride kann die Dicarbonsäureanhydrid-Gruppe in exo- oder endo-Konformation vorliegen. Im Kontext dieser Erfindung sind grundsätzlich beide Isomere sowie Mischungen beider Isomere geeignet. Bevorzugtes Beispiele einer wie hierin beschriebenen Norbornen-basierten Dicarbonsäureanhydrids sind Bicyclo[2.2.1]-5-hepten-2,3-dicarbonsäureanhydrid, d.h. ein Anhydrid der vorgenannten Struktur, wobei z 0 ist); Bicyclo[2.2.1]-methylhept-5-en-2,3-dicarbonsäureanhydrid, d.h. ein Anhydrid der vorgenannten Struktur, wobei R² Methyl ist und z 1 ist, wobei die Methylgruppe vorzugsweise an das Kohlenstoffatom in 5-Position gebunden ist. Gemäß einigen Ausführungsformen umfasst die mindestens eine Härter-Komponente der hierin beschriebenen Harzzusammensetzungen mindestens einen Anhydrid-Härter, wobei der mindestens eine Anhydrid-Härter ausgewählt ist aus Bicyclo[2.2.1]-5-hepten-2,3-dicarbonsäureanhydrid, Bicyclo[2.2.1]-methylhept-5-en-2,3-dicarbonsäureanhydrid und Mischungen davon. Andere geeignete Anhydrid-basierte Härter stellen gesättigte Norbornen-basierte Dicarbonsäureanhydride dar. Diese leiten sich aus den oben genannten Strukturen ab, wobei die Doppelbindung im Norbornen-Gerüst hydriert ist.

Weitere Anhydrid-Härter sind aliphatische Anhydride, wie beispielsweise Hexahydrophthalsäureanhydrid, Tetrahydrophthalsäureanhydrid, Methyltetrahydrophthalsäureanhydrid, Methylhexahydrophthalsäureanhydrid und Mischungen der vorgenannten; sowie aromatische Anhydride, wie beispielsweise Phthalsäureanhydrid, Trimellitsäureanhydrid und Mischungen davon. Insbesondere geeignete Anhydrid-Härter sind Hexahydrophthalsäureanhydrid, Methylhexahydrophthalsäureanhydrid und Mischungen daraus. Weitere geeignete Anhydrid-Härter sind Copolymere von Styrol und Maleinsäureanhydrid sowie anderen Anhydriden, welche mit Styrol copolymerisierbar sind.

Gemäß bevorzugten Ausführungsformen umfasst die mindestens eine Härter-Komponente der hierin beschriebenen Harzzusammensetzungen mindestens einen Anhydrid-Härter, wobei der mindestens eine Anhydrid-Härter ausgewählt ist aus Hexahydrophthalsäureanhydrid, Methylhexahydrophthalsäureanhydrid und Mischungen davon.

Als thermisch aktivierbare oder latente Härter können des Weiteren Guanidine, substituierte Guanidine, substituierte Harnstoffe, Melaminharze, Guanamin-Derivate, cyclische tertiäre Amine, aromatische Amine und/oder deren Mischungen eingesetzt werden. Dabei können die Härter stöchiometrisch mit in die Härtungsreaktion einbezogen sein. Sie können jedoch auch katalytisch wirksam sein. Beispiele für substituierte Guanidine sind Methylguanidin, Dimethylguanidin, Trimethylguanidin, Tetramethylguanidin, Methylisobiguanidin, Dimethylisobiguanidin, Tetramethylisobiguanidin, Hexamethylisobiguanidin, Hepamethylisobiguanidin und ganz besonders Cyanoguanidin (Dicyandiamid). Als Vertreter für geeignete Guanamin-Derivate seien alkylierte Benzoguanamin-Harze, Benzoguanamin-Harze oder Methoximethyl-ethoxymethylbenzoguanamin genannt. Für einkomponentige, hitzehärtende Formkörper ist das Auswahlkriterium die niedrige Löslichkeit dieser Stoffe bei Raumtemperatur in dem Harzsystem, so dass hier feste, feinvermahlene Härter den Vorzug haben. Insbesondere ist Dicyandiamid geeignet. Damit ist eine gute Lagerstabilität der hitzehärtbaren Formkörper gewährleistet.

Zusätzlich zu oder anstelle von den vorgenannten Härtern können katalytisch wirksame substituierte Harnstoffe eingesetzt werden. Dies sind insbesondere der p-Chlorphenyl-N,N-dimethylharnstoff (Monuron), 3-Phenyl-1,1-dimethylharnstoff (Fenuron) oder 3,4-Dichlorphenyl-N,N-dimethylharnstoff (Diuron). Prinzipiell können auch katalytisch wirksame tertiäre Acryl- oder Alkyl-Amine, wie beispielsweise das Benzyldimethylamin, Tris(dimethylamino)phenol, Piperidin oder Piperidinderivate eingesetzt werden. Diese haben jedoch vielfach eine zu hohe Löslichkeit in dem Klebstoffsystem, so dass hier keine brauchbare Lagerstabilität des einkomponentigen Systems erreicht wird. Weiterhin können diverse, vorzugsweise feste Imidazolderivate als katalytisch wirksame Beschleuniger eingesetzt werden. Stellvertretend genannt seien 2-Ethyl-2-methylimidazol, N-Butylimidazol, Benzimidazol sowie N-C₁-₁₂-Alkylimidazole oder N-Arylimidazole. Besonders bevorzugt ist der Einsatz einer Kombination aus Härter und Beschleuniger in Form von sog. beschleunigten Dicyandiamiden in feinvermahlener Form. Dadurch erübrigt sich der separate Zusatz von katalytisch wirksamen Beschleunigern zu dem Epoxid-Härtungssystem.

Des Weiteren können für die Katalyse der Anhydrid-Härtung starke Lewis-Säuren eingesetzt werden, wie beispielsweise Onium Ionen, insbesondere Phosphonium- oder Sulfonium-Derivate. Gemäß einigen bevorzugten Ausführungsformen umfasst die mindestens eine Härter-Komponente der hierin beschriebenen Harzzusammensetzungen mindestens einen Katalysator, wobei der mindestens eine Katalysator ausgewählt ist aus Onium-Salzen, insbesondere aus Phosphonium- und Sulfonium-Salzen, bevorzugt aus Phosphonium-Salzen.

In einer bevorzugten Ausführungsform enthält die erfindungsgemäße Harzusammensetzung, insbesondere in der Härter-Komponente mindestens eine quartäre Phosphoniumverbindung als Katalysator.

Geeignete Phosphoniumverbindungen werden im Kontext der vorliegenden Erfindung dargestellt durch die nachfolgende Formel: 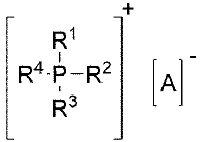 wobei jedes R¹-R⁴ jeweils unabhängig voneinander ausgewählt ist aus Wasserstoff, Halogen, linearem oder verzweigtem C1-C20 Alkyl, linearem oder verzweigtem C2-C20 Alkenyl, linearem oder verzweigtem C2-C20 Alkinyl, C3-C8 Cycloalkyl, und C6-C10 Aryl, wobei die vorgenannten organischen Reste jeweils substituiert oder unsubstituiert vorliegen können, wobei die Substituenten jeweils unabhängig ausgewählt sind aus C1-C6 Alkyl, C2-C6 Alkenyl, C2-C6 Alkinyl und Halogen; und A für ein Halogenatom steht. Bevorzugt werden die Reste R¹-R⁴ jeweils unabhängig voneinander ausgewählt aus linearen C1-C12 Alkylen, wie beispielsweise Methyl, Ethyl, n-Propyl, n-Butyl, n-Pentyl, n-Hexyl, n-Heptyl, n-Octyl, n-Nonyl, n-Decyl, n-Undecyl und n-Dodecyl.

In einigen Ausführungsformen kann es sich bei dem Gegenion [A]⁻ in obiger Formel auch um eine quartäre Borverbindung, wie beispielsweise Tetraphenylborat, ein Alkylphosphat, ein Alkylphosphinat, Trifluormethylsulfonylamid, Dicyanamid, ein Alkanoat und ein Tosylat handeln.

In bevorzugten Ausführungsformen handelt es sich bei der mindestens einen Phosphoniumverbindung um Trihexyl(tetradecyl)phosphoniumchlorid und/oder Tributylethylphosphoniumdiethylphosphat.

Gemäß einigen Ausführungsformen können geeignete Phosphoniumverbindungen auch in Form von ionischen Flüssigkeiten vorliegen.

Die erfindungsgemäßen Harzzusammensetzungen enthalten die mindestens eine quartäre Phosphoniumverbindung vorzugsweise in einer Menge im Bereich von 0,1 - 5 Gew.-%, bevorzugt in einer Menge im Bereich von 0,4 - 1,5 Gew.-%, jeweils bezogen auf das Gesamtgewicht der Harzzusammensetzung.

Die erfindungsgemäßen Zusammensetzungen können auch als zweikomponentige Zusammensetzungen formuliert werden, bei denen die beiden Reaktionskomponenten erst kurz vor der Applikation miteinander vermischt werden, wobei die Aushärtung dann bei Raumtemperatur oder mäßig erhöhter Temperatur stattfindet. Als zweite Reaktionskomponente können hierbei die für zweikomponentige Epoxyzusammensetzungen an sich bekannten Reaktionskomponenten eingesetzt werden, beispielsweise Di- oder Polyamine, aminoterminierte Polyalkylenglykole (z. B. Jeffamine, Amino-Poly-THF) oder Polyaminoamide. Weitere Reaktivpartner können mercaptofunktionelle Prepolymere sein, wie z.B. die flüssigen Thiokol-Polymere, ebenso können die erfindungsgemäßen Epoxyzusammensetzungen auch bevorzugt mit Carbonsäureanhydriden als zweiter Reaktionskomponente in 2K Formulierungen ausgehärtet werden.

Die Menge an Härter hängt von einer Reihe von Faktoren ab, üblich sind aber Konzentrationen im Bereich von 0,5 bis 60 Gew.-%, bezogen auf das Gesamtgewicht der Formulierung. Im Falle eines Anhydridbasieren Härters wird die Menge des Anhydrids vorzugsweise in einem molaren Verhältnis zum Epoxid von 2:1 bis 1:2 gewählt, bevorzugt 1,1: 1 bis 1:1,1, besonderes bevorzugt äquimolar.

Die vorliegende Erfindung betrifft des Weiteren ein Verfahren zur Herstellung einer gehärteten Zusammensetzung, umfassend die Schritte des (1) Bereitstellens einer Harzzusammensetzung, wie vorstehend beschrieben, und des (2) Härtens der Harzzusammensetzung, um auf diese Weise eine gehärtete Zusammensetzung zu erhalten.

Entsprechend gehärtete Zusammensetzungen weisen eine erhöhte mechanische Beständigkeit, insbesondere eine erhöhte Schlagzähigkeit auf, ohne die Glasübergangstemperatur herabzusetzen, so dass die erhaltenen Zusammensetzungen bei der Fertigung und ihrer zweckmäßigen Bestimmung erhöhten Temperaturen ausgesetzt werden können. Daher sind diese für die Herstellung von faserverstärkten Kunststoffformteilen, wie Automobilteilen, besonders geeignet.

"Bereitstellen", wie hierhin verwendet, bezieht sich auf das Mischen der Bestandteile der Harzzusammensetzung in beliebiger Reihenfolge. Es kann beispielsweise vorteilhaft sein, zunächst zwei oder mehr Bestandteile zusammenzugeben und gegebenenfalls zu einem heterogenen oder homogenen Gemisch zu mischen, bevor die restlichen Bestandteile hinzuzugeben werden. So kann beispielsweise zunächst die mindestens eine Epoxidharz-Komponente mit ggf. weiteren Bestandteilen gemischt und anschließend, beispielsweise kurz vor dem Härten, die mindestens eine Härter-Komponente zugegeben und in die anderen bereits durchmischten Bestandteile eingemischt werden. Zwischen den verschiedenen Kombinations- und Mischschritten kann es vorteilhaft sein, das Reaktionsgemisch auf Raumtemperatur abzukühlen. In einer anderen Ausführungsform kann es zwischen den verschiedenen Kombinations- und Mischschritten vorteilhaft sein, das Reaktionsgemisch aufzuheizen, um die Löslichkeit zu verbessern.

Generell können die einzelnen Bestandteile der Harzzusammensetzung als solche oder als Lösung in einem Lösungsmittel, wie beispielsweise einem organischen Lösungsmittel oder einem Gemisch organischer Lösungsmittel, eingesetzt werden. Hierzu ist jedes bekannte und für den erfindungsgemäßen Zweck geeignete Lösungsmittel einsetzbar. So kann das Lösungsmittel beispielsweise ein hochsiedendes organisches Lösungsmittel sein. Das Lösungsmittel kann ausgewählt sein aus der Gruppe bestehend aus Petroleum, Benzen, Toluen, Xylen, Ethylbenzen und Mischungen davon.

Die hierin beschriebene Harzzusammensetzung kann mit weiteren im Stand der Technik bekannten Bestandteilen in Form einer Klebstoffzusammensetzung oder eines Injektionsharzes kombiniert werden.

Derartige Klebstoffzusammensetzungen bzw. Injektionsharze können eine Vielzahl anderer Komponenten enthalten, von denen alle dem Fachmann auf dem Gebiet bekannt sind, einschließlich, aber nicht beschränkt auf häufig verwendete Hilfsstoffe und Additive, wie zum Beispiel Füllstoffe, Weichmacher, reaktive und/oder nichtreaktive Verdünnungsmittel, Fließmittel, Kopplungsmittel (z.B. Silane), Trennmittel, Haftvermittler, Netzmittel, Haftmittel, Flammschutzmittel, Netzmittel, Thixotropiermittel und/oder rheologische Hilfsstoffe (z.B. pyrogene Kieselsäure), Alterungs- und/oder Korrosionsinhibitoren, Stabilisatoren und/oder Farbstoffe. Je nach Anforderung an den Klebstoff bzw. das Injektionsharz und seine Anwendung und im Hinblick auf die Produktion, Flexibilität, Festigkeit und Verklebung mit Substraten, werden die Hilfs- und Zusatzstoffe in unterschiedlichen Mengen in die Zusammensetzung eingearbeitet.

Geeignete Füllstoffe schließen die verschiedenen Kreiden, Quarzpulver, Alumina, Dolomit, Kohlenstofffasern, Glasfasern, Polymerfasern, Titandioxid, Kieselglas, Aktivkohle, Talkum, Calciumoxid, Calciummagnesiumcarbonate, Bariumsulfat und insbesondere Silikat-ähnliche Füllstoffe des Aluminium-Magnesium-Calciumsilikat Typs ein, wie zum Beispiele Wollastonit und Chlorit. Typischerweise enthalten die Zusammensetzungen ungefähr 0,5 bis ungefähr 10 Gew.-% Füllstoffe.

In bevorzugten Ausführungsformen enthalten die Zusammensetzungen der Erfindung keine Weichmacher, bzw. weniger als 0,1 Gew.-% Weichmacher, da diese dazu neigen, die T_{g} zu senken.

In verschiedenen Ausführungsformen der Erfindung, wird die Harzzusammensetzung je nach gewünschter Verwendung auf ein Substrat aufgetragen, beispielsweise bei Verwendung als Klebstoff, oder in ein Formwerkzeug eingefüllt, bei der Verwendung als Formmasse zur Herstellung von Kunststoffteilen. In bevorzugten Ausführungsformen ist das Verfahren ein Spritzpress(RTM)-Verfahren und die Harzzusammensetzung ein reaktives Injektionsharz. "Reaktiv", wie in diesem Zusammenhang verwendet, bezieht sich auf die Tatsache, dass das Injektionsharz chemisch vernetzbar ist. Bei dem RTM-Verfahren kann das Bereitstellen der Harzzusammensetzung, d.h. Schritt (1) des beschriebenen Verfahrens, das Einfüllen, insbesondere Einspritzen (Injektion), des Injektionsharzes in ein Formwerkzeug umfassen. Bei der Herstellung von faserverstärkten Kunststoffteilen, wofür die beschriebenen Verfahren und Reaktionsgemische besonders geeignet sind, können vor dem Einspritzen in das Formwerkzeug in dieses Fasern oder Faserhalbzeuge (Prewovens/Preform) eingelegt werden. Als Fasern und/oder Faserhalbzeuge können die im Stand der Technik für diese Anwendung bekannten Materialien, insbesondere Kohlenstofffasern verwendet werden.

In verschiedenen Ausführungsformen sind derartige Harzzusammensetzungen Klebstoffzusammensetzungen oder Injektionsharze. Die Injektionsharze sind vorzugsweise pumpbar und insbesondere für das Spritzpressen (RTM-Verfahren) geeignet. In verschiedenen Ausführungsformen hat der Reaktionsgemisch daher bei einer Temperatur von 100°C, d.h. einer typischen Infusionstemperatur, eine Viskosität von <100 mPas.

Die Erfindung betrifft in einer Ausführungsform daher auch die mittels der erfindungsgemäßen Harzsysteme im RTM-Verfahren erhältlichen Formteile. Die RTM-Verfahren, in denen die beschriebenen Harzsysteme eingesetzt werden können, sind als solche im Stand der Technik bekannt und können von dem Fachmann ohne Weiteres derart angepasst werden, dass das erfindungsgemäße Reaktionsgemisch eingesetzt werden kann.

Die Offenzeiten der Harzzusammensetzungen, wie hierin beschrieben, sind vorzugsweise größer als 90 Sekunden und liegen besonders bevorzugt im Bereich von 2 bis 5 Minuten, insbesondere bei ungefähr 3 Minuten. "Ungefähr" oder "ca.", wie hierin im Zusammenhang mit einem Zahlenwert verwendet, bedeutet der Zahlenwert ±10%.

Je nach Art der eingesetzten Epoxide und Härter und der Verwendung der ausgehärteten Zusammensetzung kann die Harzzusammensetzung in Schritt (2) des erfindungsgemäßen Verfahrens bei unterschiedlichen Reaktionstemperaturen gehärtet werden. So kann die Härtungstemperatur zwischen 70°C und 280°C legen.

Generell kann die Härtung bei erhöhter Temperatur, d.h. >25°C, erfolgen. Vorzugsweise werden die Harze zwischen 80 °C und 280°C und bevorzugt zwischen 100°C und 240°C gehärtet. Die Dauer der Härtung hängt ebenfalls von den zu härtenden Harzen und der Katalysator-Zusammensetzung ab und kann zwischen 0,01 Stunden bis 10 Stunden liegen. Vorzugsweise dauert der Härtungszyklus wenige Minuten, d.h. insbesondere 1 bis 15 Minuten. Die Härtung kann ein- oder auch mehrstufig erfolgen.

In einigen Ausführungsformen wird die hierin beschriebene Harzzusammensetzung in einem einstufigen Verfahren bei einer Temperatur zwischen 80 °C und 240 °C, vorzugsweise zwischen 100 °C und 200 °C und bevorzugt zwischen 120 °C und 180 °C für 0,01 Stunden bis 10 Stunden, vorzugsweise für 0,1 Stunden bis 5 Stunden bevorzugt für 1 Stunde gehärtet.

In alternativen Ausführungsformen kann eine wie hierin beschriebene Harzzusammensetzung in einem mehrstufigen Verfahren gehärtet werden. Ein solches mehrstufiges Verfahren beinhaltet einen ersten Schritt des Vorhärtens, wobei die Harzzusammensetzung bei einer Temperatur zwischen 70 °C und 150 °C, vorzugsweise 100 °C und 140 °C und bevorzugt bei 120 °C für 0,01 Stunden bis 3 Stunden, vorzugsweise für 0,1 Stunden bis 2 Stunden, bevorzugt für 0,25 Stunden vorgehärtet und anschließend, in einem zweiten Schritt nachgehärtet wird. Dieser zweite Schritt des Nachhärtens kann dabei eine oder mehrere Unterschritte umfassen, sodass die vorgehärtete Harzzusammensetzung mindestens einmal, vorzugsweise mindestens zweimal und bevorzugt mindestens dreimal jeweils bei einer Temperatur zwischen 110 °C und 260 °C, vorzugsweise 130 °C und 190 °C und bevorzugt bei 180 °C für jeweils 0,1 Stunden bis 3 Stunden, vorzugsweise für 0,5 Stunden bis 2 Stunden, bevorzugt für 1 Stunde nachgehärtet wird. Beispielsweise kann ein solcher zweiter Härtungsschritt das Nachhärten der vorgehärteten Harzzusammensetzung bei einer Temperatur zwischen 130 °C und 230 °C, vorzugsweise 150 °C und 220 °C und bevorzugt bei 180 °C für 0,1 Stunden bis 3 Stunden, vorzugsweise für 0,5 Stunden bis 2 Stunden, bevorzugt für 1 Stunde; anschließend bei einer Temperatur zwischen 150 °C und 250 °C, vorzugsweise zwischen 170 °C und 230 °C und bevorzugt bei 190 °C für 0,1 Stunden bis 3 Stunden, vorzugsweise für 0,5 Stunden bis 2 Stunden, bevorzugt für 1 Stunde; und anschließend bei einer Temperatur zwischen 180 °C und 260 °C, vorzugsweise 200 °C und 250 °C und bevorzugt bei 220 °C für 0,1 Stunden bis 3 Stunden, vorzugsweise für 0,5 Stunden bis 2 Stunden, bevorzugt für 1 Stunde umfassen.

Die mittels der hierin beschriebenen Katalysatorsysteme und Verfahren gehärteten Harze haben vorzugsweise einen kritischen Spannungsintensitätsfaktor *K1c* von >0,8, vorzugsweise mindestens 0,9, noch bevorzugter von >0,95 und am bevorzugtesten von >1. Die Glasübergangstemperatur der ausgehärteten Harze liegt, in verschiedenen Ausführungsformen, im Bereich von mehr als 180°C, insbesondere mehr als 190°C, typischerweise im Bereich bis 220°C. In einigen Ausführungsformen weisen gehärtete Systeme eine Glasübergangstemperatur von ≥200 °C (DSC Midpoint) auf. Der Elastizitätsmodul der ausgehärteten Harze liegt vorzugsweise bei mindestens 2000 N/mm², vorzugsweise mindestens 2100 N/mm², typischerweise im Bereich von 2200 bis 5000 N/mm².

Des Weiteren betrifft die vorliegende Erfindung die gehärtete Zusammensetzung, die nach dem hierin beschriebenen Verfahren erhältlich ist. Diese kann, abhängig von dem Verfahren, als Formteil, insbesondere als faserverstärktes Kunststoffformteil vorliegen. Derartige Formteile werden vorzugsweise im Automobilbau oder Aerospace eingesetzt.

So eignen sich die gehärteten Zusammensetzungen besonders als Matrixharz für Faserverbundwerkstoffe. Dabei können diese in verschiedenen Anwendungsverfahren eingesetzt werden, beispielsweise im Resin-Transfer-Moulding-Verfahren (RTM-Verfahren) oder im Infusionsverfahren.

Als Faserbestandteile der Faserverbundwerkstoffe sind bekannte hochfeste Faserwerkstoffe geeignet. Diese können beispielsweise aus Glasfasern; synthetischen Fasern, wie Polyesterfasern, Polyethylenfasern, Polypropylenfasern, Polyamidfasern, Polyimidfasern oder Aramidfasern; Kohlenstofffasern; Borfasern; oxidischen oder nicht oxidischen Keramikfasern, wie Aluminiumoxid/Siliciumdioxidfasern, Siliciumcarbidfasern; Metallfasern, beispielsweise aus Stahl oder Aluminium; oder aus Naturfasern, wie Flachs, Hanf oder Jute bestehen. Diese Fasern können in Form von Matten, Geweben, Gewirken, Gelegen, Vliesen oder Rovings eingebracht werden. Es können auch zwei oder mehr dieser Fasermaterialien als Gemisch verwendet werden. Es können Kurzschnittfasern ausgewählt werden, bevorzugt werden jedoch synthetische Langfasern eingesetzt, insbesondere Gewebe und Gelege. Solche hochfesten Fasern, Gelege, Gewebe und Rovings sind dem Fachmann bekannt.

Insbesondere soll der Faserverbundwerkstoff Fasern in einem Volumenanteil von mehr als 40 Vol.-%, bevorzugt mehr als 50 Vol.-%, insbesondere bevorzugt zwischen 50 und 70 Vol.-% bezogen auf den gesamten Faserverbundwerkstoff enthalten, um besonders gute mechanische Eigenschaften zu erzielen. Im Falle von Kohlefasern wird der Volumenanteil gemäß der Norm DIN EN 2564:1998-08 bestimmt, im Falle von Glasfasern gemäß der Norm DIN EN ISO 1172:1998-12.

Ein solcher Faserverbundwerkstoff eignet sich insbesondere als Automobilbauteil. Solche Faserverbundwerkstoffe weisen gegenüber Stahl mehrere Vorteile auf, so sind sie leichter, zeichnen sich durch eine verbesserte Crash-Resistenz aus und sind außerdem langlebiger.

Es ist im Übrigen selbstverständlich, dass alle Ausführungsformen, die oben im Zusammenhang mit den beschriebenen Verfahren offenbart wurden, auch genauso in den beschriebenen Harzsystemen und gehärteten Zusammensetzungen anwendbar sind und umgekehrt.

### Beispiele

Nachfolgend sind die Materialeigenschaften von Harzzusammensetzungen bestehend aus einer Epoxid-Komponente (110 g eines cycloaliphatischen Epoxids (Epoxid-Gewicht 130 g/mol; Viskosität 240 mPas bei Raumtemperatur) plus 0,15 g eines mehrfunktionellen Fettsäureesters) und einer Härter-Komponente (140 g Methylhexahydrophthalsäureanhydrid plus 4,4 g Tributyl(ethyl) phosphoniumdiethylphosphat) in Bezug auf Zusammensetzung und Menge an PEO-PPO-PEO basierten Blockcopolymeren tabellarisch aufgelistet. Für die Herstellung entsprechender Reinharzplatten wurden zunächst die aufgelisteten Rohstoffe der Epoxidharz-Komponente in einen Speedmixer eingewogen und 5 Minuten bei 800 U/min im Vakuum gemischt. Anschließend wurden die Rohstoffe der Härter-Komponente eingewogen und erneut 5 Minuten bei 800 U/min im Vakuum gemischt. Die so erhaltenen Mischungen wurden daraufhin in entsprechend präparierte und im Autoklaven auf 120 °C vorgeheizte Edelstahlformen eingefüllt und im Autoklaven zunächst 30 Minuten bei 120 °C und anschließend eine Stunde bei 180 °C gehärtet.

| **Nr.** | **Additiv** | **Additiv [Gew.-%]** | **T_{g} (DSC) [°C]** | **K1c** | **Optische Erscheinung** |
|---|---|---|---|---|---|
| **1** | Fortegra 100^{a)} | 10,54 | 206 | 0,80 | klar, farblos |
| **2** | Pluronic PE 10500^{b)} | 10,54 | 203 | 0,84 | klar, gelbbraun |
| **3** | Pluronic PE 10500 | 15,02 | 186 | 0,85 | klar, gelbbraun |
| **4** | Pluronic L64^{c)} | 10,58 | 195 | 0,52 | klar, farblos |
| **5** | Pluronic L121^{d)} | 10,58 | 207,5 | 0,75 | leicht trüb |
| **6** | Pluronic F108^{e)} | 10,58 | 222 | 1,05 | klar, leicht gelblich |
| **7** | Pluronic F127^{f)} | 10,58 | 205,6 | 0,97 | klar, leicht gelblich |

| | | | | | |
|---|---|---|---|---|---|
| a) PPO-PBO Doblock copolymere; b) PEO-PPO-PEO Triblockcopolymer, MW PPO = 3250, MW PEO = 3250, Gesamt-MW = 6500; c) PEO-PPO-PEO Triblockcopolymer, MW PPO = 1750, MW PEO = 1167, Gesamt-MW = 2917; d) PEO-PPO-PEO Triblockcopolymer, MW PPO = 4000, MW PEO = 444, Gesamt-MW = 4444; e) PEO-PPO-PEO Triblockcopolymer, MW PPO = 3250, MW PEO = 13000, Gesamt-MW = 16250; f) PEO-PPO-PEO Triblockcopolymer, MW PPO = 4000, MW PEO = 9333, Gesamt-MW = 13333. | | | | | |

## Patentansprüche

1. Harzzusammensetzung umfassend mindestens eine Epoxidharz-Komponente und mindestens eine Härter-Komponente, **dadurch gekennzeichnet, dass** die Harzzusammensetzung des Weiteren mindestens ein PEO-PPO-PEO Triblockcopolymer umfasst.

2. Die Harzzusammensetzung gemäß Anspruch 1, **dadurch gekennzeichnet, dass** die Menge des mindestens einen PEO-PPO-PEO Triblockcopolymer in der Harzzusammensetzung im Bereich von 5-20 Gew.-%, vorzugsweise im Bereich von 7-18 Gew.-%, bevorzugt im Bereich von 10 - 15 Gew.-%, jeweils bezogen auf das Gesamtgewicht der Zusammensetzung, liegt.

3. Die Harzzusammensetzung gemäß einem der Ansprüche 1 oder 2, **dadurch gekennzeichnet, dass** das mindestens eine PEO-PPO-PEO Triblockcopolymers ein Molekulargewicht von >6000, bevorzugt >12000 aufweist.

4. Die Harzzusammensetzung gemäß einem der Ansprüche 1 bis 3, **dadurch gekennzeichnet, dass** der Molmassenanteil der PEO-Blockpolymere in dem mindestens einen PEO-PPO-PEO Triblockcopolymer 50 % - 90 %, vorzugsweise 50 % - 85 %, bevorzugt 50 % -80 % beträgt.

5. Die Harzzusammensetzung gemäß einem der Ansprüche 1 bis 4, **dadurch gekennzeichnet, dass** die mindestens eine Epoxidharz-Komponente eine Epoxidverbindung ausgewählt aus der Gruppe bestehend aus bis-(3,4-Epoxycyclohexylmethyl)oxalat, bis-(3,4-Epoxycyclohexylmethyl)adipat, bis-(3,4-Epoxy-6-Methylcyclohexylmethyl)adipat, bis-(3,4-Epoxycyclohexylmethyl)pimelat, 3,4-Epoxycyclohexylmethyl-3,4-Epoxycyclohexancarboxylat, bis-(3,4-Epoxycyclohexyl)adipat, 3,4-Epoxy-1-Methylcyclohexylmethyl-3,4-epoxy-1-methylcyclohexancarboxylat, und Mischungen davon ist

6. Die Harzzusammensetzung gemäß einem der Ansprüche 1 bis 5, **dadurch gekennzeichnet, dass** die mindestens eine Härter-Komponente mindestens einen Anhydrid-Härter umfasst.

7. Die Harzzusammensetzung gemäß Anspruch 6, **dadurch gekennzeichnet, dass** der mindestens eine Anhydrid-Härter ausgewählt ist aus Hexahydrophthalsäureanhydrid, Methylhexahydrophthalsäureanhydrid und Mischungen davon.

8. Verfahren zur Herstellung einer gehärteten Zusammensetzung, umfassend die Schritte des
(1) Bereitstellens einer Harzzusammensetzung gemäß einem der Ansprüche 1 bis 7; und
(2) Härtens der Harzzusammensetzung, um eine gehärtete Zusammensetzung zu erhalten.

9. Das Verfahren gemäß Anspruch 8, **dadurch gekennzeichnet, dass** das Verfahren ein Spritzpress(RTM)-Verfahren und die Harzzusammensetzung ein reaktives Injektionsharz ist.

10. Das Verfahren gemäß einem der Ansprüche 8 oder 9, **dadurch gekennzeichnet, dass** Schritt (1) das Einspritzen der Harzzusammensetzung in ein Formwerkzeug, in das Fasern oder Faserhalbzeuge (Prewovens/Preform) eingelegt sind, umfasst.

11. Das Verfahren gemäß einem der Ansprüche 8 bis 10, **dadurch gekennzeichnet, dass**
(a) die Harzzusammensetzung in Schritt (2) bei einer Temperatur zwischen 80 °C und 240 °C, vorzugsweise zwischen 100 °C und 200 °C und bevorzugt zwischen 120 °C und 180 °C für 0,01 Stunden bis 10 Stunden, vorzugsweise für 0,1 Stunden bis 5 Stunden bevorzugt für 1 Stunde gehärtet wird; oder
(b) die Harzzusammensetzung in Schritt (2) zunächst bei einer Temperatur zwischen 70 °C und 150 °C, vorzugsweise 100 °C und 140 °C und bevorzugt bei 120 °C für 0,1 Stunden bis 3 Stunden, vorzugsweise für 0,5 Stunden bis 2 Stunden, bevorzugt für 0,5 Stunden vorgehärtet und anschließend mindestens einmal, vorzugsweise mindestens zweimal und bevorzugt mindestens dreimal jeweils bei einer Temperatur zwischen 110 °C und 260 °C, vorzugsweise 130 °C und 190 °C und bevorzugt bei 180 °C für jeweils 0,1 Stunden bis 3 Stunden, vorzugsweise für 0,5 Stunden bis 2 Stunden, bevorzugt für 1 Stunde nachgehärtet wird.

12. Gehärtete Zusammensetzung erhältlich nach einem Verfahren der Ansprüche 8 bis 11.

13. Die gehärtete Zusammensetzung gemäß Anspruch 12, **dadurch gekennzeichnet, dass** der K1c Wert der gehärteten Zusammensetzung mindestens 0,8 beträgt.

14. Die gehärtete Zusammensetzung gemäß Anspruch 12 oder 13, **dadurch gekennzeichnet, dass** die gehärtete Zusammensetzung eine Glasübergangstemperatur T_{g} ≥ 180 °C aufweist.

15. Gehärtete Zusammensetzung gemäß einem der Ansprüche 12 bis 14, **dadurch gekennzeichnet, dass** die gehärtete Zusammensetzung ein Formteil, insbesondere ein faserverstärktes Formteil ist.
